(19) Europäisches Patentamt
European Patent Office
Office européen des brevets

(11) **EP 3 041 639 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(21) Anmeldenummer: **15717421.0**

(22) Anmeldetag: **08.04.2015**

(51) Int Cl.:
**B23P 15/00** *(2006.01)*    **F16C 33/38** *(2006.01)*
**F16C 33/41** *(2006.01)*    **B23C 3/00** *(2006.01)*
**F16C 19/06** *(2006.01)*

(86) Internationale Anmeldenummer:
**PCT/EP2015/000738**

(87) Internationale Veröffentlichungsnummer:
**WO 2015/188901 (17.12.2015 Gazette 2015/50)**

(54) **KUGELLAGER-KÄFIG UND KUGELLAGER**

BALL BEARING CAGE AND BALL BEARING

CAGE DE ROULEMENT À BILLES ET ROULEMENT À BILLES

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **12.06.2014 DE 102014008763**

(43) Veröffentlichungstag der Anmeldung:
**13.07.2016 Patentblatt 2016/28**

(73) Patentinhaber: **Gebr. Reinfurt GmbH & Co. KG**
**97222 Rimpar (DE)**

(72) Erfinder: **NIEDERMEIER, Herbert**
**97490 Poppenhausen (DE)**

(74) Vertreter: **Müller-Boré & Partner**
**Patentanwälte PartG mbB**
**Friedenheimer Brücke 21**
**80639 München (DE)**

(56) Entgegenhaltungen:
**EP-A1- 0 819 862      WO-A1-2010/066293**
**DE-A1- 1 450 057      JP-A- H01 261 516**
**JP-A- 2011 185 315    JP-A- 2013 137 099**
**US-A- 5 609 527**

**Beschreibung**

Die vorliegende Erfindung bezieht sich auf einen Kugellager-Käfig, ein Kugellager sowie ein Verfahren zum Erzeugen bzw. Ausbilden eines Kugellager-Käfigs.

Kugellager-Käfige zum Anordnen der einzelnen Kugeln eines Kugellagers sind bereits bekannt und haben die Aufgabe, die Kugeln in Umfangsrichtung des Kugellagers in gleichen Abständen auf Position zu halten. Bei derartigen Kugellager-Käfigen hat ein sogenanntes Kugeltaschenspiel eine große Bedeutung bezüglich des Verschleißverhaltens des Kugellager-Käfigs. Das Kugeltaschenspiel ist als die axiale und radiale Beweglichkeit der Kugel in der Kugeltasche definiert.

Durch Fluchtungsfehler der Lager in einem Gehäuse bzw. bei Verkippungen von Lagerstellen können sich Kugeln eines Kugelsatzes mit unterschiedlichen Geschwindigkeiten bewegen. Dies führt dazu, dass sich vor- oder nacheilende Kugeln von der Position der Kugeltasche wegbewegen wollen und dementsprechend in Umfangsrichtung Kräfte auf den Kugellager-Käfig ausüben. Dies kann zu übermäßigem Verschleiß führen.

DE 10 2010 047 962 A1 schlägt einen Kugellager-Käfig vor, bei dem die Kugeltaschen die Gestalt von Langlöchern aufweisen. Dabei ist die größte Abmessung der Kugeltasche in Umfangsrichtung des Kugellager-Käfigs vorgesehen und um etwa 20% bis etwa 55% größer als der Durchmesser der Kugeln.

Aufgrund der Ausführung der Kugeltaschen als Langloch in Umfangsrichtung kann eine geringere Anzahl von Kugeln aufgenommen werden, so dass die statische und dynamische Tragzahl des Kugellagers reduziert ist. Da darüber hinaus die an der Kontaktfläche von Kugel zu Käfig anliegende Kraft zum Antreiben des Käfigs nicht in Umfangsrichtung des Käfigs anliegt, enthält die Kraft eine Kraftkomponente in radialer Richtung des Käfigs, die den Käfig in unerwünschter Weise aus seiner Mitte heraus bewegt. Infolgedessen kann ein Verschleiß des Kugellager-Käfigs schnell fortschreiten.

JP 2011 185315 A beschreibt ein Wälzlager und einen Kugellager-Käfig, wobei der Kugellager-Käfig ringförmig ausgebildet ist und eine Mehrzahl an Taschen zur Aufnahme von Kugeln aufweist, mit den Merkmalen des Oberbegriffs von Anspruch 1.

DE 14 50 057 A1 offenbart ein Kugellager für ein Spannungswellengetriebe, wobei das Kugellager einen festen und einen verformbaren Lagerring aufweist, sowie ein kreisförmiges Trennstück, welches Taschen zum Aufnehmen von Lagerkugeln umfasst.

EP 0 819 862 A1 beschreibt eine Vorrichtung zur Herstellung eines Kugellager-Käfigs einer homokinetischen Kupplung, wobei ein exemplarischer und mit der beschriebenen Vorrichtung hergestellter Kugellager-Käfig Taschen aufweist, deren Seitenflächen Richtung Zentrum des Kugellagers konvergieren.

Die Aufgabe der Erfindung besteht somit in der Bereitstellung eines Kugellager-Käfigs mit reduzierter Reibung sowie mit verbessertem Verschleißverhalten.

Diese Aufgabe wird durch die Merkmale der unabhängigen Ansprüche gelöst. Vorteilhafte Weiterbildungen der Erfindung sind in den abhängigen Ansprüchen definiert.

Gemäß einem ersten Aspekt wird ein Kugellager-Käfig mit einer Mehrzahl von Kugeltaschen zur Verfügung gestellt, wobei jede Kugeltasche der Aufnahme einer Kugel dient,

wobei jede Kugeltasche in Axialrichtung des Kugellager-Käfigs eine Breite aufweist und in Umfangsrichtung des Kugellager-Käfigs eine Länge aufweist, wobei die Breite gleich oder geringfügig größer als ein Durchmesser der Kugel ist, so dass die Kugel in Axialrichtung kein Spiel bzw. ein geringes Spiel hat, wobei die Länge der Kugeltasche zumindest an einem Außenumfang des Kugellager-Käfigs größer als die Breite der Kugeltasche ist, so dass die Kugel in Umfangsrichtung des Kugellager-Käfigs ein großes Spiel hat, um sich relativ zu dem Kugellager-Käfig in einem gewissen Ausmaß bewegen zu können, und

die Länge der Kugeltasche am Außenumfang des Kugellager-Käfigs größer als die Länge der Kugeltasche am Innenumfang des Kugellager-Käfigs ist.

Die "Länge" der Kugeltasche am Außenumfang des Kugellager-Käfigs ist dabei entweder die Länge des Kreisbogens des durch den Außenumfang des Kugellager-Käfigs gebildeten Kreises oder die Kreissehne dieses Kreisbogens. Entsprechendes gilt für die Länge der Kugeltasche am Innenumfang. Die Länge ist demnach als die direkte Verbindung (Gerade) zwischen den die Kugeltaschen begrenzenden Punkten in Umfangsrichtung (entweder am Außenumfang oder Innenumfang) definiert oder als die Länge eines Kreisbogens des Außenumfangs bzw. des Innenumfangs des Kugellager-Käfigs.

Nachdem die Länge der Kugeltasche am Innenumfang des Kugellagerkäfigs gegenüber der Länge der Kugeltasche am Außenumfang reduziert ist, kann eine höhere Anzahl an Kugeltaschen vorgesehen werden, um eine höhere Anzahl an Kugeln in dem Kugellager-Käfig aufzunehmen. Somit kann die Tragkraft bzw. Tragzahl des Kugellagers erhöht werden.

Indem die Länge der Kugeltasche am Innenumfang reduziert ist, hat auch die Wandung der Kugeltasche, die deren Länge bestimmt und an der die Kugel mit der Kugeltasche in Kontakt tritt, eine günstigere Orientierung. Die Wandung verläuft nämlich in Richtung zu dem Mittelpunkt des Kugellager-Käfigs, so dass die Kugel den Kugellager-Käfig in etwa in Umfangsrichtung antreibt. Eine unerwünschte Kraftkomponente in einer von der Umfangsrichtung abweichenden Richtung entsteht somit nicht bzw. hat nur einen geringen Betrag. Somit wirkt nur eine geringe bzw. keine Kraftkomponente, die den Kugellager-Käfig aus dessen Mitte heraus bewegt.

Selbst bei einem Verschleiß des Kontaktpunkts der Kugel an der Wandung wird der Kugellager-Käfig im wesentlichen in tangentialer Richtung bzw. Umfangsrichtung durch die Kugel vorwärts bewegt, so dass der Kugellager-Käfig nicht aus der Symmetriemitte heraus bewegt wird. Demgemäß ist ein Verschleißverhalten des Kugellager-Käfigs verbessert.

Dabei verläuft, in einem Querschnitt des Kugellager-Käfigs, der parallel zum Radius des Kugellager-Käfigs in axialer Mitte der Kugeltasche liegt, eine die Länge der Kugeltasche begrenzende Wandung der Kugeltasche geradlinig. Auf diese Weise wirkt eine von der Kugel auf den Kugellager-Käfig aufgebrachten Antriebskraft im wesentlichen in Umfangsrichtung des Kugellager-Käfigs.

Dabei verläuft bzw. erstreckt sich die Wandung zumindest am Kontaktpunkt mit der Kugel radial zu der Mitte des Kugellager-Käfigs, so dass die an die Wandung angelegte Antriebskraft im wesentlichen in Umfangsrichtung des Kugellager-Käfigs wirkt.

Vorzugsweise ist die Kugeltasche in einer Seitenansicht, in Richtung zu der Mitte des Kugellager-Käfigs gesehen, am Innenumfang des Kugellager-Käfigs kreisförmig. Somit ist die Länge der Kugeltasche am Innenumfang minimal, um eine maximale Anzahl an Kugeln in dem Kugellager-Käfig aufnehmen zu können. Dadurch kann die Tragzahl des Kugellagers erhöht werden. Ferner kann die Kugeltasche auf einfache Weise durch ein Bohr-, Schneid- oder Fräswerkzeug hergestellt werden, das eine kreisrunde Geometrie aufweist.

Indem die die Länge der Kugeltasche begrenzende Wand bzw. Wandung der Kugeltasche im wesentlichen in radialer Richtung des Kugellager-Käfigs verläuft, können die Vorteile einer in Umfangsrichtung verlängerten Kugeltasche eingebracht werden, während gleichzeitig eine große Anzahl von Kugeln untergebracht werden kann, um die Traglast des Kugellagers zu erhöhen. In anderen Worten ist die Länge der Kugeltasche am Außenumfang des Kugellager-Käfigs größer als am Innenumfang des Kugellager-Käfigs. Gegenüber einer Kugeltasche in Langlochgestalt, bei der die Länge der Kugeltasche in Umfangsrichtung sowohl am Innenumfang als auch am Außenumfang des Kugellager-Käfigs gleich ist, kann der Kugellager-Käfig mit der in radialer Richtung verlaufenden Begrenzungswand der Kugeltasche eine größere Anzahl an Kugeln aufnehmen.

Gemäß einem weiteren Aspekt wird ein Kugellager mit einem inneren Laufring, einem äußeren Laufring, einer Vielzahl von Kugeln und einem Kugellager-Käfig zur Verfügung gestellt,

wobei der Kugellager-Käfig eine Vielzahl von Kugeltaschen für die Aufnahme der Kugeln aufweist,
wobei jede Kugeltasche in Axialrichtung des Kugellager-Käfigs eine Breite aufweist und in Umfangsrichtung des Kugellager-Käfigs eine Länge aufweist,
wobei die Breite geringfügig größer als ein Durchmesser der Kugel ist, so dass die Kugel in Axialrichtung ein geringes Spiel hat,
wobei die Länge der Kugeltasche zumindest an einem Außenumfang des Kugellager-Käfigs größer als die Breite der Kugeltasche ist, so dass die Kugel in Umfangsrichtung des Kugellager-Käfigs ein großes Spiel hat, um sich relativ zu dem Kugellager-Käfig in einem gewissen Ausmaß bewegen zu können, und
die Länge der Kugeltasche am Außenumfang des Kugellager-Käfigs größer als die Länge der Kugeltasche am Innenumfang des Kugellager-Käfigs ist,
wobei in einem Querschnitt des Kugellager-Käfigs, der parallel zum Radius des Kugellager-Käfigs in axialer Mitte der Kugeltasche liegt, eine die Länge der Kugeltasche begrenzende Wandung der Kugeltasche geradlinig verläuft, und
wobei die Wandung radial zu der Mitte des Kugellager-Käfigs verläuft.

Der Kugellager-Käfig kann sowohl als Innenring-geführter Käfig als auch als Außenring-geführter Käfig ausgebildet sein. Des Weiteren kann der Kugellager-Käfig als Massivkäfig oder als Schnappkäfig ausgeführt sein.

Vorzugsweise ist der Kugellager-Käfig aus einem Hochleistungskunststoff, wie beispielsweise Polyetheretherketon (PEEK), Polyetherketon (PEK), Polyphenylensulfid (PPS), Polyamidimid (PAI) oder Polyimid (PI), hergestellt. Es kann jedoch auch ein Baumwollgewebeverstärktes Phenolharz verwendet werden.

Die Erfindung wird nun anhand von zwei Ausführungsbeispielen unter Bezugnahme auf die beigefügten Zeichnungen näher erläutert.

Figur 1 zeigt schematisch im Querschnitt A-A einen Ausschnitt eines Innenring-geführten Kugellager-Käfigs eines ersten Ausführungsbeispiels im Bereich einer Kugeltasche.

Figur 2 zeigt eine perspektivische Ansicht des Innenring-geführten Käfigs von Figur 1.

Figur 3 zeigt einen Querschnitt durch den Kugellager-Käfig von Figur 1.

Figur 4 zeigt eine Seitenansicht des Kugellager-Käfigs von Figur 1 mit der Lage des Schnitts A-A.

Figur 5 zeigt eine Abwandlung des ersten Ausführungsbeispiels mit einem Innenring-geführten Schnappkäfig.

Figur 6 zeigt einen Querschnitt durch den Schnappkäfig von Figur 5.

Figur 7 zeigt eine Seitenansicht des Schnappkäfigs von Figur 5.

Figur 8 zeigt einen Schnitt durch ein Angularkontaktlager mit dem Innenring-geführten Kugellager-Käfig von Figur 2.

Figur 9 zeigt einen Schnitt durch ein weiteres Beispiel eines Angularkontaktlagers mit dem Innenring-geführten Kugellager-Käfig von Figur 2.

Figur 10 zeigt einen Schnitt durch ein Rillenkugellager mit dem Innenring-geführten Schnappkäfig von Figur 5.

Figur 11 zeigt schematisch im Querschnitt B-B einen Ausschnitt eines Außenring-geführten Kugellager-Käfigs eines zweiten Ausführungsbeispiels im Bereich einer Kugeltasche.

Figur 12 zeigt eine perspektivische Ansicht des Außenring-geführten Kugellager-Käfigs von Figur 11.

Figur 13 zeigt einen Querschnitt durch den Kugellager-Käfig von Figur 11.

Figur 14 zeigt eine Seitenansicht des Kugellager-Käfigs von Figur 11 mit der Lage des Schnitts B-B.

Figur 15 zeigt eine Abwandlung des zweiten Ausführungsbeispiels mit einem Außenring-geführten Schnappkäfig.

Figur 16 zeigt einen Querschnitt durch den Schnappkäfig von Figur 15.

Figur 17 zeigt eine Seitenansicht des Schnappkäfigs von Figur 15.

Figur 18 zeigt einen Schnitt durch ein Angularkontaktlager mit dem Außenring-geführten Kugellager-Käfig von Figur 12.

Figur 19 zeigt einen Schnitt durch ein weiteres Beispiel eines Angularkontaktlagers mit dem Außenring-geführten Kugellager-Käfig von Figur 12.

Figur 20 zeigt einen Schnitt durch ein Rillenkugellager mit dem Außenring-geführten Schnappkäfig von Figur 15.

Fig. 21 zeigt ein Herstellungsverfahren des Kugellager-Käfigs zum Erzeugen der Kugeltaschen.

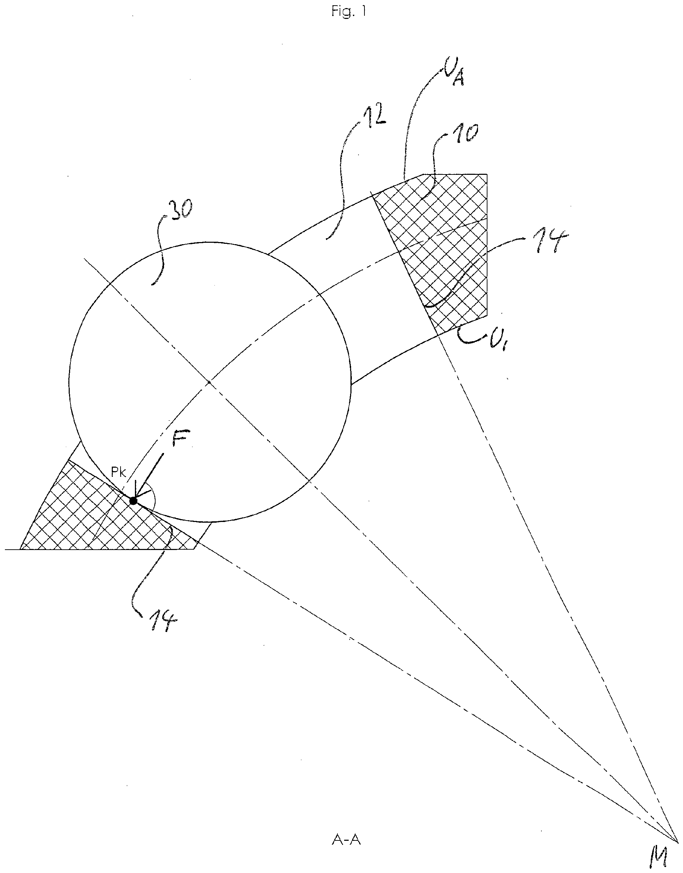

Wie in den Figuren 1 bis 3 gezeigt ist, hat ein Kugellager-Käfig 10 des ersten Ausführungsbeispiels eine Vielzahl von Kugeltaschen 12 zum Führen jeweils einer Kugel 30. Dabei ist eine Abmessung bzw. Breite B der Kugeltasche 12 in axialer Richtung geringfügig größer als ein Durchmesser der Kugel 30, um ein Spiel zu ermöglichen. Im Gegensatz hierzu ist eine Abmessung bzw. eine Länge der Kugeltasche 12 in Umfangsrichtung zumindest am Außenumfang $U_A$ deutlich größer als der Durchmesser der Kugel 30, etwa 20% bis etwa 50% größer als der Durchmesser der Kugel 30, wie insbesondere in der Schnittzeichnung A-A von Figur 1 dargestellt ist.

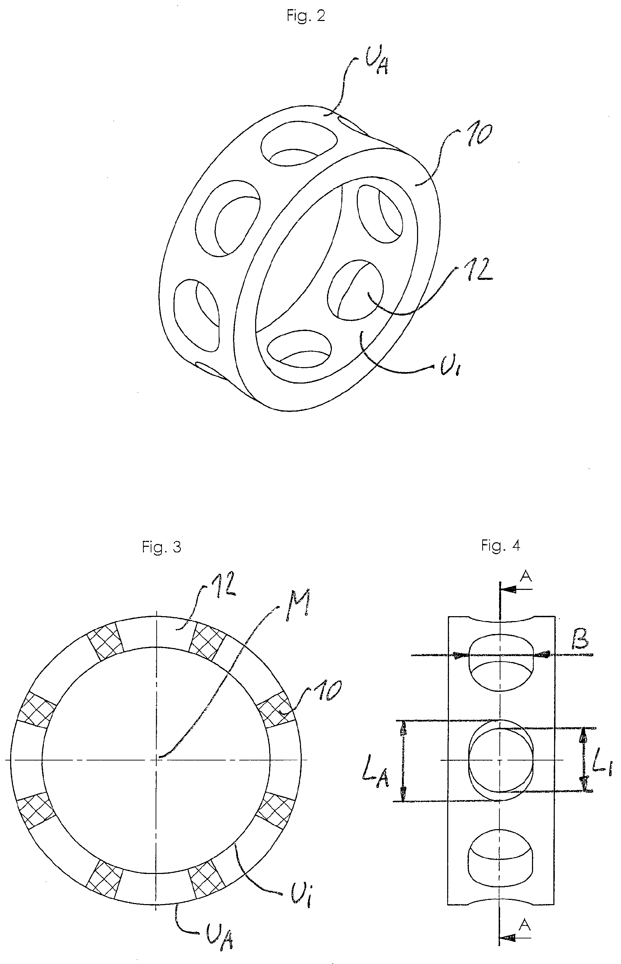

Dabei ist jedoch eine Länge $L_I$ der Kugeltasche 12 am Innenumfang $U_I$ des Kugellager-Käfigs 10 geringer als eine Länge $L_A$ der Kugeltasche 12 am Außenumfang $U_A$ des Kugellager-Käfigs 10, wie insbesondere in Fig. 4 dargestellt ist. Dadurch ergibt sich eine Langloch-Konfiguration der Kugeltasche 12 zumindest am Außenumfang $U_A$. Am Innenumfang $U_I$ hingegen kann die Kugeltasche 12 eine kreisförmige Konfiguration aufweisen, so dass die Länge $L_I$ der Kugeltasche 12 am Innenumfang $U_I$ des Kugellager-Käfigs 10 im wesentlichen gleich der Breite B der Kugeltasche 12 in axialer Richtung ist.

Obwohl es eingangs bereits erwähnt ist, wird die "Länge" entweder als direkte Verbindung (Gerade) zwischen den die Kugeltasche 12 begrenzenden Punkten in Umfangsrichtung (entweder am Außenumfang $U_A$ oder Innenumfang $U_I$) definiert oder als die Länge eines Kreisbogens des Außenumfangs bzw. des Innenumfangs des Kugellager-Käfigs 10.

Die Länge $L_I$ am Innenumfang $U_I$ des Kugellager-Käfigs 10 kann jedoch auch größer als die Breite B sein, so dass sich auch am Innenumfang $U_I$ eine Langloch-Konfiguration ergibt. Jedoch ist auch in diesem Fall die folgende Bedingung erfüllt:

$$L_A > L_I$$

Die Langloch-Konfiguration am Innenumfang $U_I$ hat also eine geringere Länge $L_I$ des Langlochs als jene des Langlochs am Außenumfang $U_A$.

In einem Querschnitt A-A (siehe Fig. 1) des Kugellager-Käfigs 10, der parallel zum Radius des Kugellager-Käfigs 10 in axialer Mitte der Kugeltasche 12 liegt, erstrecken sich die Wandungen 14 der Kugeltasche 12, die die Länge der Kugeltasche 12 in Umfangsrichtung begrenzen, in Richtung zu dem Mittelpunkt M des Kugellager-Käfigs 10 in konvergierender Weise, um obige Bedingung zu erfüllen. Vorzugsweise erstrecken sich die Wandungen 14 der Kugeltasche 12 im wesentlichen in radialer Richtung des Kugellager-Käfigs 10 zu dessen Mittelpunkt M.

Aufgrund der Tatsache, dass obige Bedingung erfüllt ist, können mehr Kugeln 30 aufgenommen werden im Vergleich zu einem Kugellager-Käfig mit Langloch-Konfiguration, bei dem $L_A = L_I$ gilt. Hierdurch kann die Tragzahl des Kugellagers erhöht werden.

Somit hat die Kugeltasche 12 in dem Schnitt A-A eine sich in radialer Richtung zu dem Mittelpunkt M des Kugellager-Käfigs 10 hin verjüngende Gestalt, während die Breite B der Kugeltasche 12 in radialer Richtung zu dem Mittelpunkt M des Kugellager-Käfigs 10 hin im wesentlichen konstant ist.

Darüber hinaus ist die Geometrie der Kugeltasche 12 vorzugsweise so ausgebildet, dass die Wandung 14 zumindest in einem Kontaktpunkt $P_K$ mit der Kugel 30 in radialer Richtung zu dem Mittelpunkt M des Kugellager-Käfigs 10 verläuft. Somit wird eine Kraft F zum Antreiben des Kugellager-Käfigs 10 durch die Kugel 30 an der Wandung 14 in Längsrichtung der Kugeltasche 12 bzw. in Umfangsrichtung des Kugellager-Käfigs 10 eingeleitet, so dass es keine Kraftkomponente gibt, die den Kugellager-Käfig 10 aus seiner Mitte M heraus bewegt.

In anderen Worten wird der Kugellager-Käfig 10 durch die Kugel 30 mit einer Kraft F beaufschlagt und angetrieben, die im wesentlichen in Umfangsrichtung des Kugellager-Käfigs 10 gerichtet ist. Deshalb wird eine auf den Kugellager-Käfig 10 aufgebrachte Drehkraft minimiert, weil keine Störkräfte in radialer oder anderen Richtungen eingeleitet werden. Eine Gesamtreibung kann ferner ebenfalls minimiert werden. Hierdurch wird auch ein Verschleißverhalten positiv beeinflusst und die Lebensdauer des Kugellager-Käfigs 10 sowie eines damit ausgestatteten Kugellagers verlängert.

Selbst wenn die Kugeltasche 12 am Kontaktpunkt $P_K$ durch die Reibung mit der Kugel 30 verschleißt bzw. einläuft, um dort eine verschleißbedingte Ausbuchtung zu bilden, gibt es keine in radialer Richtung des Kugellager-Käfigs 10 wirkende Kraftkomponente, so dass selbst bei einer eingelaufenen bzw. verschlissenen Kugeltasche 12 kein übermäßiger Folgeverschleiß auftritt. Die Lebensdauer des Kugellager-Käfigs 10 und somit des gesamten Kugellagers kann dadurch beträchtlich erhöht werden.

Da die Länge $L_I$ der Kugeltasche 12 am Innenumfang $U_I$ des Kugellager-Käfigs 10 geringer ist als die Länge $L_A$ der Kugeltasche 12 am Außenumfang $U_A$ des Kugellager-Käfigs 10, kann eine maximale Anzahl von Kugeln 30 entlang des Umfangs des Kugellager-Käfigs 10 untergebracht werden, um die Traglast des Kugellagers zu erhöhen.

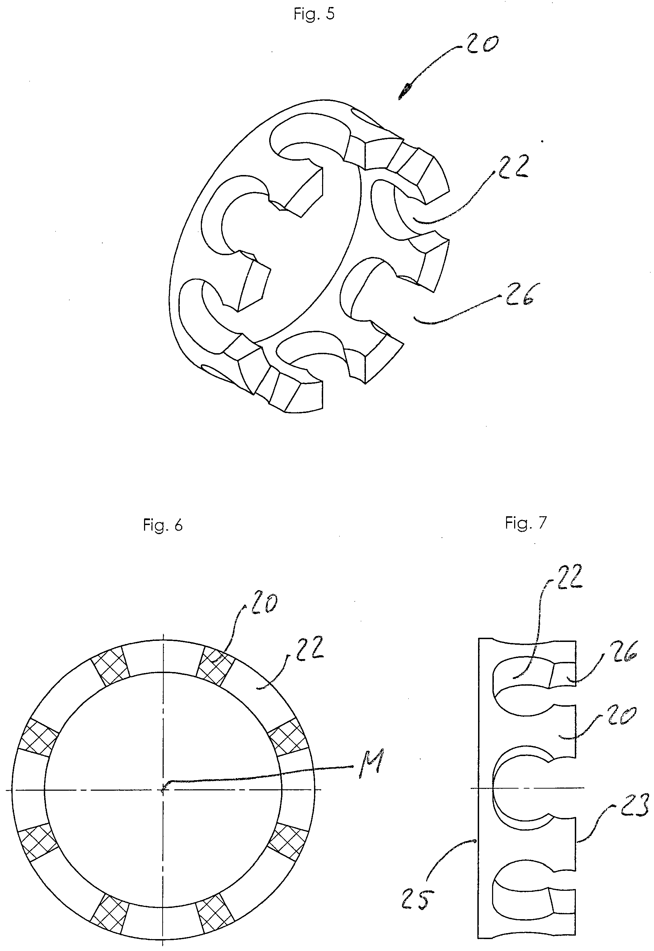

In den Figuren 5 bis 7 ist eine Abwandlung des ersten Ausführungsbeispiels dargestellt. Im Gegensatz zu dem Kugellager-Käfig 10 der Figuren 1 bis 4, der als Massivkäfig ausgebildet ist, ist der in den Figuren 5 bis 7 dargestellte Schnappkäfig 20 mit einer Öffnung 26 an jeder Kugeltasche 22 versehen. Die Öffnungen 26 sind dabei jeweils an einer axialen Endseite 23 des Schnappkäfigs 20 vorgesehen, während die andere entgegengesetzte Endseite 25 des Schnappkäfigs 20 geschlossen ausgebildet ist.

Die Öffnungen 26 dienen dabei dem Einschnappen des Schnappkäfigs 20 in den Kugelsatz bestehend aus der Vielzahl an Kugeln 30 eines Kugellagers. Diese Abwandlung bietet den Vorteil, dass der Schnappkäfig 20 eines Kugellagers auswechselbar ist bzw. leichter montiert werden kann als der Kugellager-Käfig 10 in Massivbauweise. Die Kugeltaschen 22 sind, bis auf deren Öffnungen 26, geometrisch so ausgestaltet wie die Kugeltaschen 12 des ersten Ausführungsbeispiels.

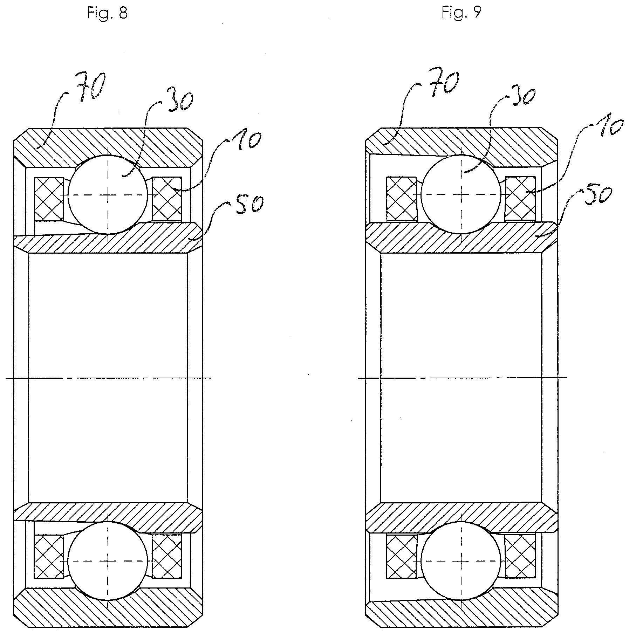

Figur 8 und 9 zeigen das vollständige Kugellager des ersten Ausführungsbeispiels mit einem inneren Laufring 50 sowie einem äußeren Laufring 70. Der Kugellager-Käfig 10 aus den Figuren 1 bis 4 ist als Innenring-geführter Kugellager-Käfig 10 ausgeführt, wie in Figur 8 und 9 zu erkennen ist. Dabei gleitet der Innenumfang $U_I$ des Kugellager-Käfigs 10 auf einem Außenumfang des inneren Laufringes 50.

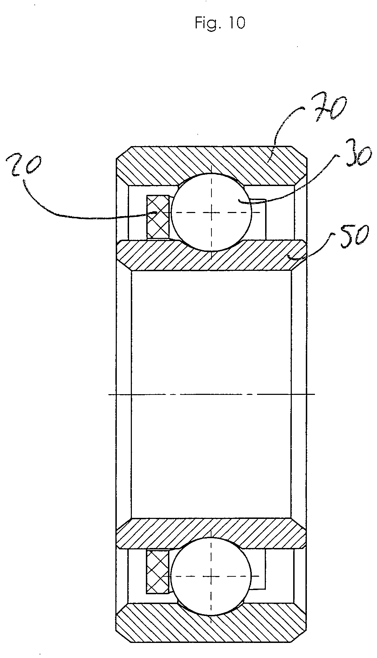

Figur 10 zeigt das vollständige Kugellager der Abwandlung des ersten Ausführungsbeispiels mit dem Schnappkäfig 20, der ebenfalls als Innenring-geführter Käfig ausgebildet ist. Da die anderen Komponenten des Kugellagers aus Figur 10 gleich jenen der Figuren 8 und 9 sind, kann eine weitere Erläuterung hier unterbleiben.

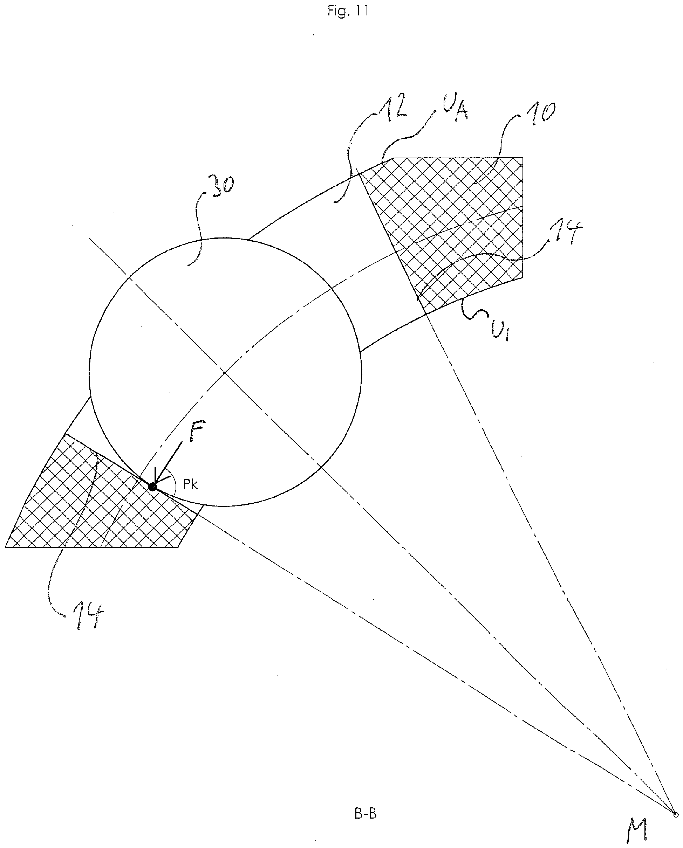

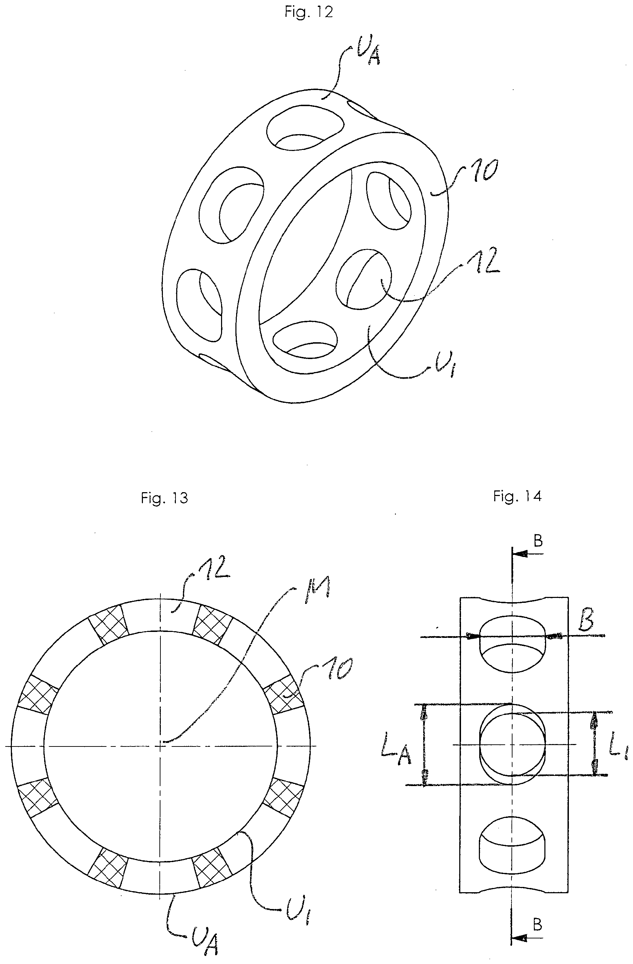

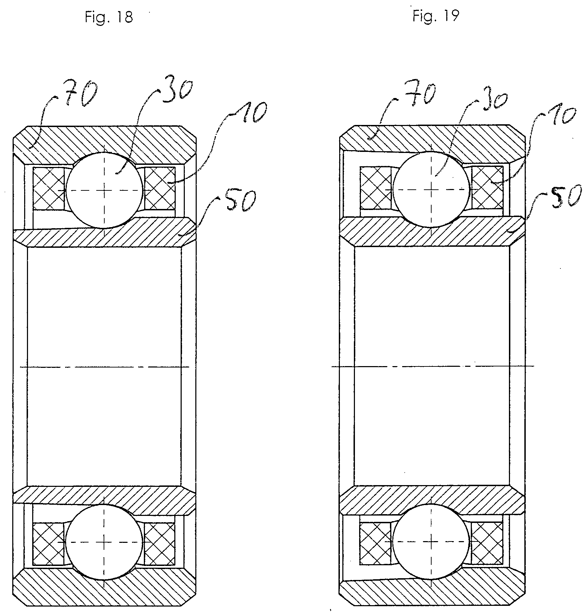

Die Figuren 11 bis 14 zeigen ein zweites Ausführungsbeispiel mit einem Außenring-geführten Kugellager-Käfig 10, der, wie in Figur 18 und 19 gezeigt ist, mit seinem Außenumfang $U_A$ an einem Innenumfang des äußeren Laufringes 70 geführt ist. Alle anderen Merkmale des zweiten Ausführungsbeispiels aus den Figuren 11 bis 14 entsprechen jenen des ersten Ausführungsbeispiels mit dem Massivkäfig der Figuren 1 bis 4.

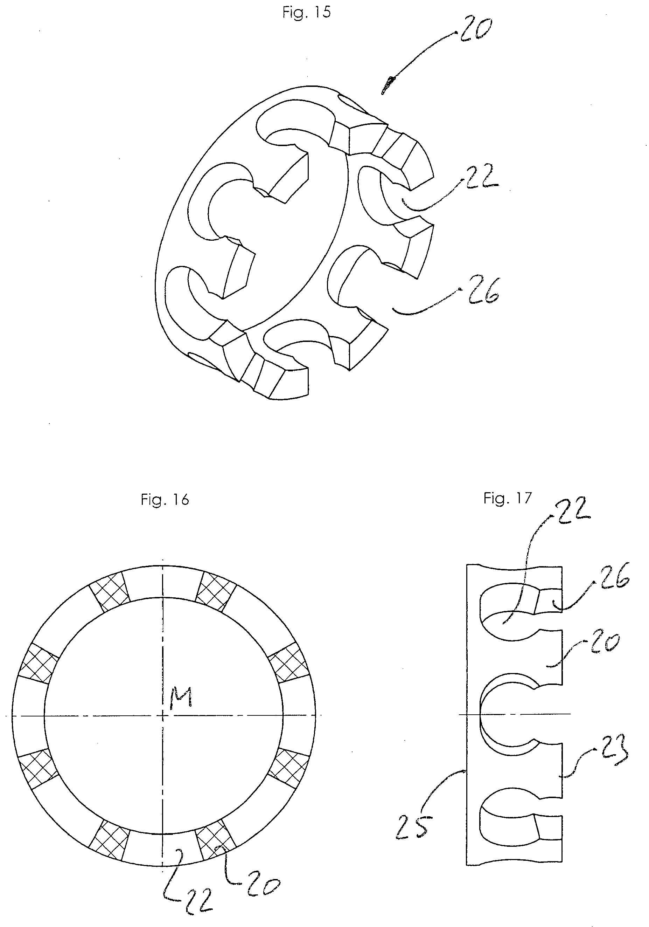

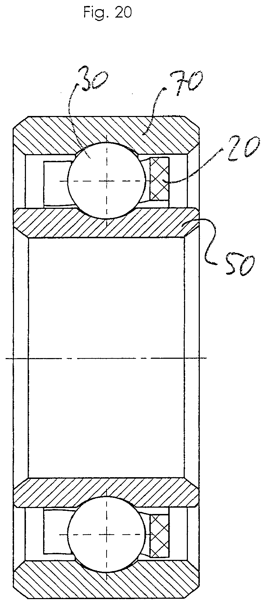

Die Figuren 15 bis 17 zeigen eine Abwandlung des zweiten Ausführungsbeispiels mit einem Schnappkäfig 20 korrespondierend zu dem Schnappkäfig 20 der Figuren 5 bis 7. Jedoch ist der Schnappkäfig 20 der Figuren 15 bis 17 als Außenring-geführter Schnappkäfig 20 ausgebildet, wie aus Figur 20 ersichtlich ist. Dabei gleitet der Außenumfang $U_A$ des Schnappkäfigs .20 an einem Innenumfang des äußeren Laufringes 70 des Kugellagers.

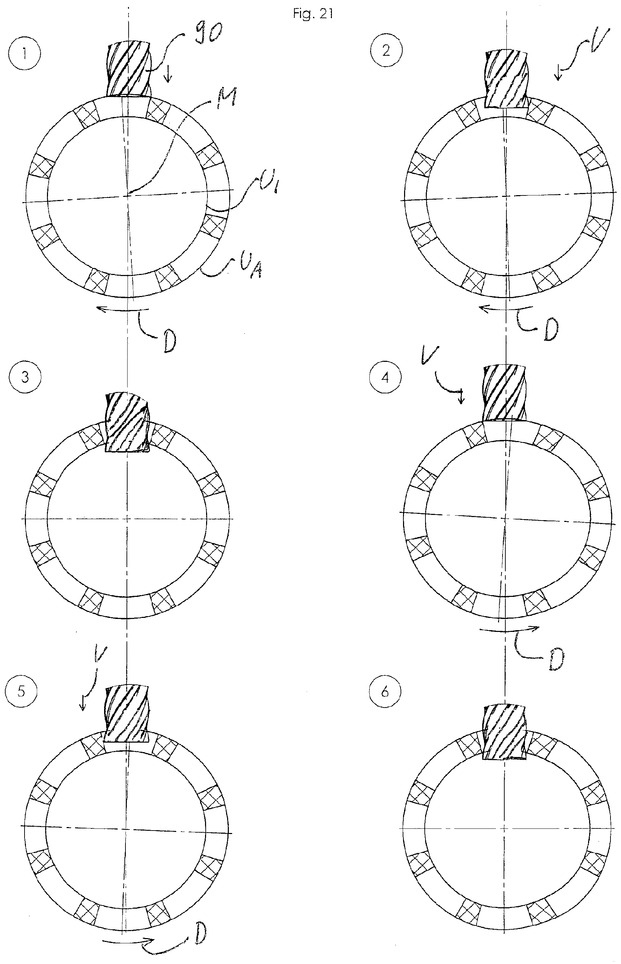

Figur 21 zeigt sechs Bearbeitungsschritte (1) bis (6) zum Erzeugen der Kugeltaschen 12, 22 mit einem Bohr-, Schneid- oder Fräswerkzeug 90, das entlang seiner Drehachse vertikal beweglich ist, wie durch einen Vorschubpfeil V in Fig. 21 gezeigt ist.

Um die Kugeltaschen 12, 22 zu erzeugen, wird entweder ein Halbzeug in der Gestalt eines Rohrs oder einer Stange zur Verfügung gestellt. Vorzugsweise wird ein stangenförmiges Ausgangsmaterial verwendet, das zunächst durch Bohren mit der Innenbohrung versehen wird. Danach wird der Außenumfang überdreht, um den gewünschten Außendurchmesser zu erhalten. Es kann auch noch ein Ausdrehen der Innenbohrung durchgeführt werden.

Zum Erzeugen der Kugeltasche 12 bzw. 22 wird das Bohr-, Schneid- oder Fräswerkzeug 90 am Außenumfang $U_A$ des Halbzeugs schneidend bzw. bohrend eingeführt, um die Kugeltasche 12 bzw. 22 zu erzeugen.

Da die Kugeltaschen 12, 22 jedoch keine zylindrische Form haben, die sich ergeben würde, wenn das Bohr- oder Schneidwerkzeug 90 einfach in Richtung zu dem Mittelpunkt M des Halbzeugs bzw. des Kugellager-Käfigs 10 bzw. des Schnappkäfigs 20 geführt werden würde, wird das Halbzeug bzw. der Kugellager-Käfig 10 bzw. Schnappkäfig 20 während des Bohrvorgangs in seiner Umfangsrichtung weiterbewegt, wie durch den Pfeil D dargestellt ist, so dass sich die längliche Form der Kugeltasche 12 bzw. 22 mit der größeren Länge $L_A$ am Außenumfang $U_A$ als am Innenumfang $U_I$ ergibt. Somit ist kein zusätzlicher Bearbeitungsschritt zum Erzeugen der oben beschriebenen Gestalt der Kugeltasche 12, 22 gegenüber einer zylindrischen Gestalt erforderlich.

Vorzugsweise wird dabei zunächst eine Seite in Umfangsrichtung bearbeitet, indem das Halbzeug während des Bohrvorgangs im Uhrzeigersinn gedreht wird, wie in den Schritten (1) und (2) von Fig. 21 dargestellt ist. Am Ende des Bohrvorgangs stößt das Werkzeug 90 am Innenumfang $U_I$ des Halbzeugs in der Gestalt eines Rohrs durch, wie im Schritt (3) von Fig. 21 gezeigt ist. Danach wird das Werkzeug 90 vollständig aus der halb fertigen Kugeltasche 12, 22 herausgezogen und ein zweiter Bohrvorgang durchgeführt, um die zweite Seite in Umfangsrichtung zu erzeugen.

Wie in den Schritten (4) und (5) von Fig. 21 dargestellt ist, wird bei dem zweiten Bohrvorgang das Halbzeug entgegen dem Uhrzeigersinn gedreht, wie durch den Pfeil D gezeigt ist. Hierdurch wird die zweite Seite korrespondierend zu der ersten Seite in Umfangsrichtung erzeugt. Am Ende des Bohrvorgangs stößt das Werkzeug 90 am Innenumfang $U_I$ des Halbzeugs in der Gestalt eines Rohrs wiederum durch, wie im Schritt (6) von Fig. 21 gezeigt ist.

Nach dem Erzeugen der Kugeltaschen 12, 22 über den Umfang des Halbzeugs, wird das Halbzeug entsprechend abgeschnitten, um den Kugellager-Käfig 10 bzw. Schnappkäfig 20 zu erhalten. Der Schritt des Trennens des Endabschnitts von dem Halbzeug wird durch Abstechen oder Abschneiden durchgeführt. Darüber hinaus kann der Kugellager-Käfig 10 bzw. Schnappkäfig 20 noch durch Gleitschleifen und/oder eine Gratbeseitigung bearbeitet werden. Dieser Bearbeitungsschritt kann vor oder nach dem Trennen des Endabschnitts von dem Halbzeug erfolgen.

Der beschriebene Kugellager-Käfig 10 bzw. Schnappkäfig 20 wird insbesondere für Hochgeschwindigkeitsanwendungen angewandt, wie beispielsweise in der Dentaltechnik mit einem Drehzahlkennwert im Bereich von etwa n x dm ≥ 1 000 000 mm/min, wobei n der Innenringdrehzahl entspricht und dm dem mittleren Lagerdurchmesser entspricht. Der mittlere Lagerdurchmesser dm wird als ein Durchschnittswert zwischen dem Außendurchmesser und dem Bohrungsdurchmesser des Kugellagers berechnet.

Der beschriebene Kugellager-Käfig 10 bzw. Schnappkäfig 20 wird vorzugsweise aus einem Hochleistungskunststoff hergestellt, wie beispielsweise Polyetheretherketon (PEEK), Polyetherketon (PEK), Polyphenylensulfid (PPS), Polyamidimid (PAI) oder Polyimid (PI). Es kann jedoch auch ein Baumwollgewebe-verstärktes Phenolharz verwendet werden.

Indem die Kugeltasche 12 bzw. 22 die Langlochkonfiguration aufweist, wird das typische Kugeltaschenspiel in axialer Richtung, d.h. senkrecht zur Umfangsrichtung des Kugellagers beibehalten, während das Spiel in Umfangsrichtung deutlich erhöht ist. Damit erhalten die Kugeln 30 in den Kugeltaschen 12, 22 in Umfangsrichtung eine größere Möglichkeit, die unterschiedlichen Kugelgeschwindigkeiten durch Veränderung der Position der Kugel 30 auszugleichen, ohne dass zusätzliche Kräfte in Umfangsrichtung auf den Kugellager-Käfig 10, 20 erzeugt werden.

Andererseits kann eine maximale Anzahl an Kugeltaschen 12, 22 in dem Kugellager-Käfig 10, 20 ausgebildet werden, indem die Längserstreckung $L_A$ der Langlochkonfiguration am Außenumfang $D_A$ des Kugellager-Käfigs 10, 20 größer ist als eine Längserstreckung $L_I$ an dessen Innenumfang $D_I$.

Es versteht sich, dass die Erfindung auf zahlreiche Arten von Kugellagern anwendbar ist. Hierzu zählen Radialrillenkugellager, Angularkontaktlager, Axialrillenkugellager, Schrägkugellager, Vierpunktlager und Schulterkugellager. Die Kugellager können dabei einreihig oder zweireihig ausgeführt sein.

Der äußere Laufring 70 und der innere Laufring 50 werden beispielsweise aus Chromstahl gefertigt, wie beispielsweise aus 100Cr6 (Werkstoff-Nr. 1.3505), ein Stahl mit einem Gehalt von ca. 1 % Kohlenstoff und 1,5 % Chrom. Weitere Stähle sind zum Beispiel 100CrMn6 und 100CrMo6, die Legierungselemente Mangan (Mn) und Molybdän (Mo) dienen der besseren Durchhärtbarkeit.

Für Anwendungen in korrosiver Umgebung werden auch die hochlegierten Stähle X65Cr13 (Werkstoff-Nr. 1.4037) und X105CrMo17 (Werkstoff-Nr. 1.4125) oder X30CrMoN15-1 (Werkstoff-Nr. 1.4108) verwendet. Letzterer kann, zumindest für einige Tage, auch im menschlichen Organismus zum Einsatz kommen. Für besondere Betriebsbedingungen gibt es auch folgende Ausführungen:

- Hybridlager (zwei Werkstoffe), bei denen die Lagerringe bzw. Laufkränze 50, 70 aus Stahl und die Kugeln 30 aus Keramik bestehen, zum Beispiel bei Spindellagern für Werkzeugmaschinen;
- Keramiklager, bei denen sowohl die Laufkränze 50, 70 als auch die Kugeln 30 aus Keramik bestehen; und
- Kunststofflager mit Kugeln 30 aus Glas oder Keramik gegen aggressive Säuren oder Laugen in der Chemie- und Lebensmittelindustrie.

**Bezugszeichenliste**

| | |
|---|---|
| 10 | Kugellager-Käfig |
| 12 | Kugeltasche |
| 14 | Wandung in Umfangsrichtung |
| 20 | Schnappkäfig |
| 22 | Kugeltasche |
| 23 | axiale Endseite |
| 25 | entgegengesetzte Endseite |
| 26 | Öffnung |

30     Kugel
50     innerer Laufring
70     äußerer Laufring
90     Schneid-, Bohr oder Fräswerkzeug
B     Breite
D     Drehrichtung
F     Kraft
$L_A$     Länge am Außenumfang
$L_I$     Länge am Innenumfang
M     Mittelpunkt des Kugellager-Käfigs
$P_K$     Kontaktpunkt
$U_I$     Innenumfang
$U_A$     Außenumfang
V     Vorschubrichtung

**Patentansprüche**

1. Kugellager-Käfig mit einer Mehrzahl von Kugeltaschen (12, 22), wobei jede Kugeltasche (12, 22) der Aufnahme einer Kugel (30) dient,
   wobei jede Kugeltasche (12, 22) in Axialrichtung des Kugellager-Käfigs (10, 20) eine Breite (B) aufweist und in Umfangsrichtung des Kugellager-Käfigs (10, 20) eine Länge aufweist, wobei die Breite (B) geringfügig größer als ein Durchmesser der Kugel (30) ist, wobei die Länge zumindest an einem Außenumfang ($U_A$) des Kugellager-Käfigs (10) größer als die Breite (B) der Kugeltasche (12, 22) ist,
   wobei in einem Querschnitt (A-A, B-B) des Kugellager-Käfigs (10, 20), der parallel zum Radius des Kugellager-Käfigs (10, 20) in axialer Mitte der Kugeltasche (12, 22) liegt, eine die Länge der Kugeltasche (12, 22) begrenzende Wandung (14) der Kugeltasche (12, 22) geradlinig verläuft; und
   wobei der Kugellager-Käfig **dadurch gekennzeichnet ist, dass**:

   die Länge ($L_A$) der Kugeltasche (12, 22) am Außenumfang ($U_A$) des Kugellager-Käfigs (10) größer als die Länge ($L_I$) der Kugeltasche (12, 22) am Innenumfang ($U_I$) des Kugellager-Käfigs (10, 20) ist; und
   die Wandung (14) radial zu der Mitte (M) des Kugellager-Käfigs (10, 20) verläuft.

2. Kugellager-Käfig nach Anspruch 1, wobei die Kugeltasche (12, 22) in einer Seitenansicht, in Richtung zu der Mitte (M) des Kugellager-Käfigs (10, 20) gesehen, am Innenumfang ($U_I$) des Kugellager-Käfigs (10, 20) kreisförmig oder Langlochförmig ist.

3. Kugellager-Käfig nach einem der vorherigen Ansprüche, wobei der Kugellager-Käfig (10, 20) aus einem Hochleistungskunststoff, wie beispielsweise Polyetheretherketon (PEEK), Polyetherketon (PEK), Polyphenylensulfid (PPS), Polyamidimid (PAI) oder Polyimid (PI), oder einem Baumwollgewebe-verstärktem Phenolharz hergestellt ist.

4. Kugellager-Käfig nach einem der vorherigen Ansprüche, wobei der Kugellager-Käfig (10, 20) als Innenring-geführter Käfig oder als Außenring-geführter Käfig ausgebildet ist und/oder wobei der Kugellager-Käfig (10, 20) als Massivkäfig (10) oder als Schnappkäfig (20) ausgeführt ist.

5. Kugellager mit einem inneren Laufring (50), einem äußeren Laufring (70), einer Vielzahl von Kugeln (30) und einem Kugellager-Käfig (10, 20),
   wobei der Kugellager-Käfig (10, 20) eine Vielzahl von Kugeltaschen (12, 22) für die Aufnahme der Kugeln (30) aufweist,
   wobei jede Kugeltasche (12, 22) in Axialrichtung des Kugellager-Käfigs (10, 20) eine Breite (B) aufweist und in Umfangsrichtung des Kugellager-Käfigs (10, 20) eine Länge aufweist, wobei die Breite (B) geringfügig größer als ein Durchmesser der Kugel (30) ist, wobei die Länge zumindest an einem Außenumfang ($U_A$) des Kugellager-Käfigs (10) größer als die Breite (B) der Kugeltasche (12, 22) ist,
   wobei in einem Querschnitt (A-A, B-B) des Kugellager-Käfigs (10, 20), der parallel zum Radius des Kugellager-Käfigs (10, 20) in axialer Mitte der Kugeltasche (12, 22) liegt, eine die Länge der Kugeltasche (12, 22) begrenzende Wandung (14) der Kugeltasche (12, 22) geradlinig verläuft; und
   wobei das Kugellager **dadurch gekennzeichnet ist, dass**:

   die Länge ($L_A$) der Kugeltasche (12, 22) am Außenumfang ($U_A$) des Kugellager-Käfigs (10, 20) größer als die Länge ($L_I$) der Kugeltasche (12, 22) am Innenumfang ($U_I$) des Kugellager-Käfigs (10, 20) ist, und
   die Wandung (14) radial zu der Mitte (M) des Kugellager-Käfigs (10, 20) verläuft.

6. Kugellager nach Anspruch 5, wobei der Kugellager-Käfig (10, 20) als Innenring-geführter Käfig oder als Außenring-geführter Käfig ausgebildet ist und/oder wobei der Kugellager-Käfig (10, 20) als Massivkäfig (10) oder als Schnappkäfig (20) ausgeführt ist.

**Claims**

1. A ball bearing cage including plural ball pockets (12, 22), each ball pocket (12, 22) serving as a receptor of a ball (30),
   wherein each ball pocket (12, 22) comprises a width (B) in the axial direction of the ball bearing cage (10, 20) and a length in the circumferential direction of the ball bearing cage (10, 20), the width (B) being slightly greater than a diameter of the ball (30), wherein the length is greater than the width (B) of the ball pocket (12, 22) at least at an outer circumference (U$_A$) of the ball bearing cage (10), wherein a walling (14) delimiting the length of the ball pocket (12, 22) is extending rectilinearly in a cross section (A-A, B-B) of the ball bearing cage (10, 20) situated in the axial centre of the ball pocket (12, 22) in parallel to the radius of the ball bearing cage (10, 20); and

the ball bearing cage being **characterized in that**:

the length (L$_A$) of the ball pocket (12, 22) at the outer circumference (U$_A$) of the ball bearing cage (10) is greater than the length (L$_I$) of the ball pocket (12, 22) at the inner circumference of the ball bearing cage (10, 20); and the walling (14) extends radially in respect to the centre (M) of the bearing ball cage (10, 20).

2. The ball bearing cage according to claim 1, wherein the ball pocket (12, 22) is circular or elongated hole shaped at the inner circumference of the ball bearing cage (10, 20), as viewed in the direction towards the centre (M) of the ball bearing cage (10, 20).

3. The ball bearing cage according to any of the preceding claims, wherein the ball bearing cage (10, 20) is made from a high-performance plastic, such as polyether ether ketone (PEEK), polyether ketone (PEK), polyphenylene sulphide (PPS), polyamideimide (PAI) or polyimide (PI), or a cotton fabricreinforced phenolic resin.

4. The ball bearing cage according to any of the preceding claims, wherein the ball bearing cage (10, 20) is formed as an inner race-guided cage or as an outer race-guided cage and/or wherein the ball bearing cage (10, 20) is embodied as a solid cage (10) or as a snap cage (20).

5. A ball bearing including an inner race (50), an outer race (70), a plurality of balls (30) and a ball bearing cage (10, 20), wherein the ball bearing cage (10, 20) comprises a plurality of ball pockets (12, 22) for the reception of the balls (30), wherein each ball pocket (12, 22) comprises a width (B) in the axial direction of the ball bearing cage (10, 20) and a length in the circumferential direction of the ball bearing cage (10, 20), the width (B) being slightly greater than a diameter of the ball (30), wherein the length is greater than the width (B) of the ball pocket (12, 22) at least at an outer circumference (U$_A$) of the ball bearing cage (10), wherein a walling (14) delimiting the length of ball pocket (12, 22) is extending rectilinearly in a cross section (A-A, B-B) of the ball bearing cage (10, 20) situated in the axial centre of the ball pocket (12, 22) in parallel to the radius of the ball bearing cage (10, 20); and

the ball bearing being **characterized in that**:

the length (L$_A$) of the ball pocket (12, 22) at the outer circumference (U$_A$) of the ball bearing cage (10) is greater than the length (L$_I$) of the ball pocket (12, 22) at the inner circumference of the ball bearing cage (10, 20); and the walling (14) extends radially in respect to the centre (M) of the bearing ball cage (10, 20).

6. The ball bearing according to claim 5, wherein the ball bearing cage (10, 20) is formed as an inner race-guided cage or as an outer race-guided cage and wherein the ball bearing cage (10, 20) is embodied as a solid cage (10) or as a snap cage (20).

**Revendications**

1. Cage de roulement à billes avec une pluralité de poches de billes (12, 22), dans laquelle chaque poche de billes (12, 22) sert à la réception d'une bille (30), dans laquelle chaque poche de billes (12, 22) présente dans la direction axiale de la cage de roulement à billes (10, 20) une largeur (B) et présente dans la direction périphérique de la cage de roulement à billes (10, 20) une longueur, dans laquelle la largeur (B) est légèrement plus grande qu'un diamètre de la bille (30), dans laquelle la longueur est supérieure à la largeur (B) de la poche de billes (12, 22) au moins à une périphérie externe (U$_A$) de la cage de roulement à billes (10), dans laquelle une paroi (14) limitant la longueur de la poche de billes (12, 22) de la poche de billes (12, 22) s'étend en ligne droite dans une coupe transversale (A-A, B-B) de la cage de roulement à billes (10, 20) qui se situe parallèlement au rayon de la cage de roulement à billes (10, 20) dans le milieu axial de la poche de billes (12, 22) ; et dans laquelle la cage de roulement à billes (10, 20) est **caractérisée en ce que** :

la longueur (L$_A$) de la poche de billes (12, 22) à la périphérie externe (U$_A$) de la cage de roulement à billes (10) est supérieure à la longueur (L$_I$) de la poche de billes (12, 22) à la périphérie interne (U$_I$) de la cage de roulement à billes (10, 20) ; et la paroi (14) s'étend radialement par rapport au milieu (M) de la cage de roulement à billes (10, 20).

2. Cage de roulement à billes selon la revendication 1, dans laquelle la poche de billes (12, 22) est circulaire ou en forme de trou oblong à la périphérie interne (U$_I$) de la cage de roulement à billes (10, 20) dans une vue latérale, vue en direction du centre (M) de la cage de roulement à billes (10, 20).

3. Cage de roulement à billes selon une des revendications précédentes, dans laquelle la cage de roulement à billes (10, 20) est fabriquée à partir d'un plastique hautes performances, comme par exemple de la polyétheréthercétone (PEEK), de la polyéthercétone (PEK), du poly(sulfure de phénylène) (PPS), du polyamideimide (PAI) ou du polyimide (PI), ou d'une résine phénolique renforcée par du tissu cotonneux.

4. Cage de roulement à billes selon une des revendications précédentes, dans laquelle la cage de roulement à billes (10, 20) est réalisée en tant que cage guidée sur une bague intérieure ou en tant que cage guidée sur une bague extérieure et/ou dans laquelle la cage de roulement à billes (10, 20) est conçue en tant que cage massive (10) ou en tant que cage à déclic (20).

5. Roulement à billes avec une bague de roulement intérieure (50), une bague de roulement extérieure (70), une pluralité de billes (30) et une cage de roulement à billes (10, 20),
dans lequel la cage de roulement à billes (10, 20) présente une pluralité de poches de bille (12, 22) pour la réception des billes (30),
dans lequel chaque poche de billes (12, 22) présente dans la direction axiale de la cage de roulement à billes (10, 20) une largeur (B) et présente dans la direction périphérique de la cage de roulement à billes (10, 20) une longueur, dans lequel la largeur (B) est légèrement plus grande qu'un diamètre de la bille (30), dans lequel la longueur est supérieure à la largeur (B) de la poche de billes (12, 22) au moins à une périphérie externe ($U_A$) de la cage de roulement à billes (10),
dans lequel une paroi (14) limitant la longueur de la poche de billes (12, 22) de la poche de billes (12, 22) s'étend en ligne droite dans une coupe transversale (A-A, B-B) de la cage de roulement à billes (10, 20) qui se situe parallèlement au rayon de la cage de roulement à billes (10, 20) dans le milieu axial de la poche de billes (12, 22) ; et
dans lequel le roulement à billes est **caractérisé en ce que** :

la longueur ($L_A$) de la poche de billes (12, 22) à la périphérie externe ($U_A$) de la cage de roulement à billes (10, 20) est supérieure à la longueur ($L_I$) de la poche de billes (12, 22) à la périphérie interne (Ui) de la cage de roulement à billes (10, 20), et
la paroi (14) s'étend radialement par rapport au milieu (M) de la cage de roulement à billes (10, 20).

6. Roulement à billes selon la revendication 5, dans lequel la cage de roulement à billes (10, 20) est réalisée en tant que cage guidée sur une bague intérieure ou en tant que cage guidée sur une bague extérieure et/ou dans lequel la cage de roulement à billes (10, 20) est conçue en tant que cage massive (10) ou en tant que cage à déclic (20).

Fig. 1

A-A

Fig. 2

Fig. 3

Fig. 4

Fig. 5

Fig. 6

Fig. 7

Fig. 8

Fig. 9

Fig. 10

Fig. 11

B-B

Fig. 12

Fig. 13

Fig. 14

Fig. 15

Fig. 16

Fig. 17

Fig. 18

Fig. 19

18

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010047962 A1
- JP 2011185315 A
- DE 1450057 A1
- EP 0819862 A1